# EUROPÄISCHE PATENTSCHRIFT

(11) **EP 0 371 425 B1**
(45) Veröffentlichungstag und Bekanntmachung des Hinweises auf die Patenterteilung: **08.03.1995**
(21) Anmeldenummer: 89121840.6
(22) Anmeldetag: 27.11.1989
(51) Int. Cl.: B29C 51/10, B29C 51/42, B29C 51/14

(54) **Verfahren zur Herstellung tiefgezogener Kunststoff-Formteile**
Method for the manufacture of deep-drawn plastics parts
Procédé de fabrication de pièces embouties en matière plastique

(30) Priorität: 01.12.1988 DE 3840542; 20.02.1989 DE 3905177
(43) Veröffentlichungstag der Anmeldung: 06.06.1990
(73) Patentinhaber: Niebling, Curt, D-82377 Penzberg (DE); BAYER AG, 51368 Leverkusen (DE)
(72) Erfinder: Niebling, Curt, D-8122 Penzberg (DE); Wank, Joachim, Dipl.-Ing., D-4047 Dormagen 5 (DE)
(74) Vertreter: Brehm, Hans-Peter, Dr. Dipl.-Chem.

(56) Entgegenhaltungen:
- DE-A- 2 154 506
- GB-A- 2 022 008
- US-A- 3 527 855
- US-A- 3 682 571
- S.T.Z. SCHWEIZERISCHE TECHNISCHE ZEITSCHRIFT, Nr. 50. 16. Dezember 1971, Seiten 1017-1023; D. ULRICH: "Das Verformen von Kunststoffen im festen Zustand"
- MATERIAUX ET TECHNIQUES, Nr. 3. März 1980, Seiten 92-93; "Le formage des matières plastiques a froid ou a température peu élevée"
- PATENT ABSTRACTS OF JAPAN, Band 9, Nr. 198 (M-404)[1921], 15. August 1985;& JP-A-60 61 230 (INOUE EMU TEE PII K.K.) 09-04-1985
- PATENT ABSTRACTS OF JAPAN, Band 9, Nr. 238 (M-416)[1961], 25. September 1985;& JP-A-60 92 826 (SHINKOUBE DENKI K.K.) 24-05-1985

## Beschreibung

Die Erfindung betrifft ein Verfahren zur Herstellung eines tiefgezogenen, vorzugsweise mehrfarbigen Kunststoff-Formteils, wobei kalt-reckbares Folienmaterial bei einer Arbeitstemperatur unterhalb der Erweichungstemperatur des Folienmaterials mit Hilfe eines fluiden Druckmittels unmittelbar und direkt beaufschlagt und isostatisch verformt wird. Die erfindungsgemäß erhältlichen Tiefziehteile, die wahlweise mit weiterem Kunststoff verstärkt werden können, weisen typischerweise unterschiedlich gefärbte und/oder transparente Wandabschnitte auf und können beispielsweise als Gehäuseteil, Leuchtzeichen- oder Instrumenten-Abdeckung, beleuchtbare Druck- oder Schalter-Taste, Heizblende, Armaturenbrett-(abschnitte) oder Rückleuchtenlinse in Kraftfahrzeugen eingesetzt werden.

Tiefgezogene Kunststoff-Formteile werden typischerweise nach dem Vakuumverfahren oder dem Preßluftverfahren durch Umformung von Folien oder Platten aus thermoplastischen Materialien erhalten, die vor ihrer Umformung auf eine oberhalb der Materialerweichungstemperatur gelegene Temperatur erwärmt worden sind. Beim Preßluftverfahren ist ein Arbeitsmitteldruck kleiner 6 bar üblich und völlig ausreichend. Eine Erwärmung auf wenigstens die Erweichungstemperatur erfordert Energie und Zeit. Das verformte Produkt kann nur formstabil aus dem Werkzeug entnommen werden, was eine Abkühlung von Produkt und Werkzeug voraussetzt. Erwärmung vor und Abkühlung nach jedem Umformungsschritt erfordern vergleichsweise lange Taktzeiten.

Ein Verfahren nach dem Oberbegriff des Anspruches 1 ist im wesentlichen aus PATENT ABSTRACTS OF JAPAN, Band 9, Nr. 238 (M-416) 1961 25. September 1985, JP-A-60 92 826, bekannt. Dort wird ein Verformungsverfahren mit Druckluft angegeben. Um ein Formteil mit guter Wärmebeständigkeit, günstiger Schichtdickenverteilung und wenig inneren Spannungen zu erhalten, wird eine Folie aus thermoplastischem Kunststoff erwärmt und erweicht. Die Erwärmung erfolgt bis zu einer Temperatur unterhalb der Schmelztemperatur des Kunststoffs. An anderer Stelle wird gesagt, daß die Folie aus thermoplastischem Kunststoff erhitzt wird bis zu und erweicht wird bei einer Temperatur, die unterhalb des Schmelzpunktes oder des Erweichungspunktes liegt. In jedem Falle muß bei diesem bekannten Verfahren eine Erwärmung durchgeführt werden, die zu einer Erweichung des Folienmaterials führt. Die Verformung erfolgt mit Hilfe von Druckluft, die bis zu einer Temperatur erwärmt worden ist, die unterhalb der Schmelztemperatur des Kunststoffs liegt. Insoweit handelt es sich bei diesem bekannten Verfahren um das bereits oben allgemein referierte Preßluftverfahren und weist dessen Nachteile auf.

Mit dem Beitrag "Das Verformen von Kunststoffen im festen Zustand" von Dieter ULRICH in "Schweizerische Technische Zeitschrift", Nr. 50, vom 16. Dez. 1971, Seiten 1017-1023, werden verschiedene Verfahren zum Verformen von Kunststoffhalbzeugen (Platten, Folien, Stangen, Rohren) zu Gebrauchsgegenständen durch Anwendung von Druck ohne Aufschmelzen des Kunststoffes vorgestellt (engl.: solid phase forming). Neben dem "Schmieden", der Extrusion und dem Tiefziehen bei Raumtemperatur werden auch das Gummikissen-Verfahren und die Membranverformungsmethode referiert. Beim Membranverformungsverfahren wird eine Membran aus elastischem Material, wie beispielsweise Gummi, hydraulisch oder pneumatisch beaufschlagt. Die sich dabei auswölbende Membran drückt den Rohling, beispielsweise eine Kunststofftafel, gegen eine Form, die von einem Stempel abgestützt ist. Wegen der großen elastischen Dehnung von Gummi bei Zugbeanspruchung wird eine erhebliche Ziehtiefe erhalten. Bereits mit einem Wasserdruck von 30 kp/cm² soll eine ausgezeichnete Konturenwiedergabe an der Grenzfläche von der Form zum Kunststoff erhalten werden. Für einfache Formen soll bereits ein Luftdruck von 7 bis 8 kp/cm² ausreichen. Bei dem Membranverformungsverfahren sind die Gleiteigenschaften zwischen der drückenden Membran (Gummi) und dem zu verformenden Kunststoff bedeutsam. Ein direkter, unmittelbarer Kontakt zwischen dem fluiden Druckmittel (beispielsweise Wasser oder Luft) und der zu verformenden Kunststoff-Folie erfolgt nicht.

Aus DE A1-37 33 759 ist ein Verfahren zum Herstellen eines Behälters aus einer tiefziehfähigen thermoplastischen Verbundfolie aus Kunststoff, vorzugsweise Polypropylen, mit einer Schicht aus Polyvinylidenchlorid bekannt. Die Verbundfolie wird anfänglich auf eine Temperatur oberhalb 130° C erwärmt, um den Kristallisationsgrad des Polyvinylidenchlorids herabzusetzen, danach auf eine Temperatur unterhalb 75° C abgeschrekt und unmittelbar nach dem Abschrecken durch Tiefziehen nach dem Vakuumverfahren umgeformt. Obwohl mit möglichst großer Abkühlgeschwindigkeit gearbeitet werden soll, wird für das Abschrecken und Tiefziehen eine Zeitspanne zwischen 15 und 300 Sekunden empfohlen.

Beim Verfahren nach DE A1-37 27 926 werden ebene und/oder vorgeformte Platten aus unidirektional oder multidirektional mit Kurzfasern oder Langfasern verstärkte Thermoplaste als Halbzeug mittels Heißpressen in einem beheizbaren, aus einer Formmulde und einer Abdeckung bestehenden Formwerkzeug umgeformt. Zwischen dem Halbzeug und der Abdeckung wird eine Trennfolie mit guter Dehnungseigenschaft angeordnet, die einen größeren Verformungswiderstand hat als das Halbzeug. Auch dieses Verfahren entspricht der vorstehend erläuterten Membranverformungsmethode. Auch hier erfolgt die Umformung mittelbar; das heißt, das Druckfluid wirkt auf die Trennfolie ein, und die letztere formt und preßt das Halbzeug an die Formmulde. Die Trennfolie hat eine höhere Formänderungsfestigkeit und setzt der Verformung einen größeren Widerstand entgegen als das Halbzeug. Unter diesen Bedingungen wird für das gasförmige oder flüssige Druckfluid vorzugsweise ein Druck zwischen 2 und 20 bar vorgesehen. Die Beaufschlagung mit Druck und Temperatur erfolgt vorzugsweise so lange, bis das weiche Thermoplast-Halbzeug und die Trennfolie sich an die Konturen der Werkzeugform angelegt haben.

Die wesentliche Aufgabe der Erfindung besteht darin, ein schnelleres und/oder wirtschaftlicheres Verfahren zum Tiefziehen von Kunststoff-Folien oder -Platten anzugeben, nach dem wahlweise auch duroplastische Materialien verarbeitbar sind. Ferner soll ein Verfahren bereitgestellt werden, nach dem auch mit einem Belag, etwa einem Farbaufdruck versehene Folien verformbar sind, die nach dem Tiefziehvorgang eine exakte Positionierung und hohe Konturenschärfe des poren- und rißfreien Belags aufweisen.

Ausgehend von einem Verfahren zur Herstellung eines tiefgezogenen Kunststoff-Formteils, wobei kalt-reckbares Folienmaterial bei einer Arbeitstemperatur unterhalb der Erweichungstemperatur des Folienmaterials mit Hilfe eines fluiden Druckmittels unmittelbar und direkt beaufschlagt und isostatisch verformt wird, ist die erfindungsgemäße Lösung dieser Aufgabe dadurch gekennzeichnet, daß
der Druckmitteldruck mehr als 20 bar beträgt; und
die Verformung des Folienmaterials innerhalb einer Zeitspanne kleiner als 5 Sekunden durchgeführt wird.

Sofern bedruckte und/oder mit einem Belag versehene Folien verformt werden, wird vorzugsweise eine Druckfarbe bzw. ein Belag gewählt, deren Material bei der Arbeitstemperatur verformbar ist, insbesondere elastisch und/oder erweichbar ist.

Im Anschluß an die erfindungsgemäße Hochdruckverformung kann weiteres, vorzugsweise transparentes Kunstharz an das Tiefziehteil angespritzt werden. Auf diese Weise ist es möglich, für die Verformung dünnere Folien zu verwenden, welche sich besser verformen lassen, und nachträglich durch das Hinterspritzen die notwendige Steifigkeit zu erreichen. Weiterhin kann der Farbaufdruck oder Belag sandwichartig zwischen zwei Lagen Kunststoffmaterial eingebettet sein.

Die erfindungsgemäße Hochdruckverformung ermöglicht einen schnelleren Verfahrensablauf. Für den Fachmann lag es wegen des größeren Aufwandes nicht auf der Hand, mit derart hohen Drücken zu arbeiten. Es war für ihn auch überraschend, daß die mit der Anwendung von hohen Drücken verbundene schlagartige Verformung keine Beschädigung der Kunststoff-Folie zur Folge hat, insbesondere wenn die zu verformende Kunststoff-Folie nicht länger durch eine elastische Membran geschützt ist. Das erfindungsgemäße Verfahren kommt ohne zusätzliche Membran oder Trennfolie aus und vermeidet deren Verschleiß. Ein weiterer bedeutender Vorteil des neuen Verfahrens liegt darin, daß auch duroplastische Kunststoff-Folien sowie stark orientierte hochkristalline Kunststoff-Folien verformbar sind, die nach dem bekannten, eine thermische Erweichung erfordernden Verfahren (Thermoverfahren, Hydroformverfahren) nicht verformt werden können.

Obwohl bei der erfindungsgemäßen Hochdruckverformung unterhalb der Erweichungstemperatur des Folienmaterials gearbeitet wird, fließt das kalt-reckbare Folienmaterial weitgehend kontrolliert und gleichmäßig. Die Einflüsse von Kanten, Winkeln und sonstigen Wandabschnitten einer Form auf das Kunststoff-Fließverhalten sind wesentlich herabgesetzt. Die Folie verformt sich ballonartig in den Formhohlraum hinein, wobei eine gleichmäßige Dehnung aller nichteingespannten Folienabschnitte stattfindet. Die Verformung erfolgt vorzugsweise in Sekundenbruchteilen und wird in erster Linie durch die über die gesamte Folie weitgehend homogene Molekülstruktur und Molekülbeweglichkeit bestimmt. Die Flächenzunahme erfolgt vor allem durch Molekühlumlagerungen auf molekularer Ebene. Dabei ist der Verformungsgrad durch die Reißdehnung der jeweiligen Kunststoffolie limitiert. Die vorzugsweise eingesetzten Folienmaterialien machen ohne weiteres eine Flächenverdoppelung (100 %ige Flächenzunahme) mit. Vorzugsweise soll bei der erfindungsgemäßen Hochdruckverformung die durch den Tiefziehvorgang bewirkte Flächenzunahme 120 % der verformbaren Folienfläche nicht übersteigen.

Typische Folienmaterialien weisen teilkristallinen Aufbau auf und enthalten amorphe Anteile. Die Kristallite weisen eine bestimmte, bekannte Schmelztemperatur bzw. einen Schmelztemperaturbereich Tₛ auf. Jedenfalls bei einer Erwärmung über diese Kritallitschmelztemperatur hinaus tritt ein Weichwerden und Fließen des gesamte Materials auf. Die Erweichungstemperatur des betrachteten Materials ist erreicht oder überschritten. Oberhalb dieser Erweichungstemperatur ist einfacher Materialtransport durch Fließen des Materials möglich. Spritzgußverfahren nutzen diesen erleichterten Materialtransport und arbeiten typischerweise oberhalb der Erweichungstemperatur. Die Erweichungstemperatur der wichtigsten in Frage kommenden Folienmaterialien sind bekannt oder können einfach bestimmt werden, beispielsweise als Vicat-Erweichungspunkt.

Die erfindungsgemäße Hochdruckverformung wird unterhalb der Erweichungstemperatur, vorzugsweise wenigstens 40°K und mehr unterhalb der Erweichungstemperatur des jeweiligen Folienmaterials durchgeführt. Die Erweichungstemperatur von Polycarbonaten auf der Basis von Bisphenol A (etwa MAKROLON- oder MAKROFOL-Folien) liegt etwa bei oder oberhalb 150°C. Die Spritzgußverarbeitung dieser Polycarbonate erfolgt typischerweise oberhalb 200°C. Demgegenüber kann die erfindungsgemäße isostatische Hochdruckverformung solcher Polycarbonatfolien bei Zimmertemperatur durchgeführt werden.

Aufgrund ihres Anteiles an amorphen Bestandteilen weist die Mehrzahl der teilkristallinen Kunststoffe unterhalb ihrer Erweichungstemperatur eine Glasübergangstemperatur, kurz "Glastemperatur" (T_{g}) auf. Beim Überschreiten der Glastemperatur wird die Molekülbeweglichkeit der amorphen Anteile erhöht, weil vorher "eingefrorene" Bewegungs- und Rotationsfreiheitsgrade "aufgetaut" werden. Oberhalb der Glasübergangstemperatur vermögen die Makromoleküle der Polymere und Kunststoffe Platzwechselvorgänge leichter auszuführen, was sich in einer gesteigerten ("Makro-") Brownschen Molekularbewegung ausdrückt. Das Kunststoffmaterial nimmt den sogenannten "Glaszustand" ein. Die Glastemperatur (T_{g}) eines Folienmaterials hängt von verschiedenen Faktoren ab, zu denen die chemische Konstitution (Anteil an polaren Gruppen), die räumliche Konfiguration (ataktisches oder syntaktisches Material), die Vorbehandlung (Gehalt an Leerstellen), der Gehalt an Copolymerisatkomponenten und gegebenenfalls ein Weichmacheranteil gehören. Die Glastemperatur kann insbesondere mit Hilfe dynamischer Methoden bestimmt werden, zu denen beispielsweise die Messung der Temperatur -abhängigen Veränderung mechanisch-dynamischer Eigenschaften (etwa der Verlustmodul) gehören. Darüberhinaus ist für die wichtigsten, hier in Frage kommenden Folienmaterialien die Glastemperatur (T_{g} bzw. T_{g}(dyn)) bekannt.

Zwischen der Erweichungstemperatur und der Glastemperatur eines Kunststoffes kann ein erheblicher Abstand bestehen. Beispielsweise weist Polyethylenterephthalat eine Erweichungstemperatur von etwa 260°C und eine Glastemperatur (abhängig vom Kristallitanteil) zwischen etwa 65 und 81°C auf.

Die erfindungsgemäße Hochdruckverformung kann unterhalb der Glastemperatur des Folienmaterials durchgeführt werden. Vorzugsweise wird oberhalb der Glastemperatur gearbeitet, weil oberhalb der Glastemperatur der Formänderungswiderstand herabgesetzt und die plastische Deformierung erleichtert ist. Das zum Tiefziehen erforderliche "plastische Ziehen" des Folienmaterials kann leichter durchgeführt werden. Weil die Verformung unter "plastischem Fließen" erfolgt, ist das Rückstellvermögen des verformten Kunststoffes bei Raum- oder Gebrauchstemperatur herabgesetzt.

Im Falle einer mit einem Farbaufdruck versehenen Folie wird vorzugsweise bei einer Arbeitstemperatur zwischen 80 und 130°C gearbeitet. Die in vielen Farben, beispielsweise Siebdruckfarben, verwendeten Farbträger sind unterhalb 80°C fest, um bei den typischerweise zu erwartenden Gebrauchstemperaturen einen stabilen, dauerhaften Farbaufdruck zu liefern. Jedoch sind viele Farbträger bei Temperaturen zwischen 80 und 130°C ausreichend verformbar, um die bei der erfindungsgemäßen Hochdruckverformung auftretende Formänderung und Flächenzunahme des Folienmaterials ohne Beeinträchtigung (Abplatzen, Riß- oder Porenbildung) mitzumachen. Farben, insbesondere Siebdruckfarben, deren Farbstoffträger oberhalb 80°C verformbar ist, sind zumindest im Fachhandel beziehbar. Auch Farben mit einem plastischen Farbträger, beispielsweise auf Polyurethanbasis, sind gut geeignet. Ferner kann die erfindungsgemäße Hochdruckverformung auch an Folien vorgenommen werden, die mit einem anderen Belag versehen sind, beispielsweise mit einer aufgedampften Metalldünnschicht oder mit einer elektrisch leitenden Lackschicht.

Unter einem "kalt-reckbaren" Folienmaterial wird ein Folienmaterial verstanden, das bei Raumtemperatur erheblich biaxial gereckt werden kann, vorzugsweise wenigstens bis zu einer Flächenzunahme um 100 %. Überraschenderweise kann die erfindungsgemäße Hochdruckverformung vieler gängiger kaltreckbarer Folienmaterialien bereits bei Raumtemperatur durchgeführt werden. Im Rahmen der Erfindung wird die Hochdruckverformung vorzugsweise bei Raumtemperatur durchgeführt, weil ein geringerer Aufwand erforderlich ist. Jegliche Heizung und Abkühlung des Formwerkzeugs kann unterbleiben.

Die Verformung des Folienmaterials wird vorzugsweise unter einem Druckmitteldruck zwischen 50 und 300 bar und besonders bevorzugt unter einem Druckmitteldruck zwischen 60 und 250 bar vorgenommen. Insbesondere bei größerer Formfläche, bei höherer Konturenschärfe und/oder bei höherer Materialstärke kommen die höheren Drücke in Betracht. Beispielsweise hat sich bei einer Polycarbonat-Folie mit einer Schichtdicke von 50 »m ein Arbeitsmitteldruck von wenigstens 20 bar, bei einer Schichtdicke von 100 »m ein Arbeitsmitteldruck von 50 bar und bei einer Schichtdicke von 200 »m und mehr ein Arbeitsmitteldruck von 100 bar und höher gut bewährt und liefert in jedem Falle eine scharfkantige Nachbildung des Formhohlraumes.

Bei der erfindungsgemäßen Hochdruckverformung wird das Folienmaterial unmittelbar und direkt mit dem fluiden Druckmittel beaufschlagt. Innerhalb von Sekundenbruchteilen nach Öffnung eines Einlaßventils für das Druckmittel ist die Folie an den Formhohlraum und/oder an einen erhabenen Formabschnitt angepaßt und der Umformungsvorgang beendet. Bei gewissen, mechanisch weniger belastbaren Folienmaterialien, beispielsweise bei einreiß- oder bruchempfindlichen Celluloseestern kann ein verzögerter Druckaufbau durch gedrosselte Druckmittelzufuhr ratsam sein. Auch bei größeren Mehrnutzen-Formwerkzeugen kann die vollständige Verformung der gesamten Folie etwas länger dauern. Auch in diesen Fällen ist die Verformung innerhalb weniger als 2 Sekunden abgeschlossen.

Als fluide Druckmittel können die typischerweise eingesetzten Flüssigkeiten und Gase verwendet werden. Im Hinblick auf Kosten, Verfügbarkeit und einfache Handhabung wird vorzugsweise mit Druckluft gearbeitet. Auch Inertgas wie Stickstoff, Helium oder Argon sind in Einzelfällen gut geeignet. Beim Auftreffen auf die zu verformende, typischerweise ebene Kunststoffolie soll das Druckmittel wenigstens die Arbeitstemperatur aufweisen. Auch höhere Druckmitteltemperaturen sind möglich, soweit sie nicht zu einer Erweichung des Folienmaterials führen.

Wenigstens Folien mit Schichtdicken zwischen 40 und 2000 »m können erfindungsgemäß umgeformt werden und werden vorzugsweise vorgesehen. Bei höheren Schichtdicken bewirkt die schlagartige Umformung häufig eine Versprödung des Materials. Im Falle von scharfkantigen Konturen kann die Differenz der Krümmungsradien zwischen Innenseite und Außenseite zu groß werden und bewirkt dann häufig Materialzerstörungen. Besonders bevorzugt werden Folien mit einer Schichtdicke zwischen 50 und 500 »m eingesetzt. Besonders gute Ergebnisse wurden beispielsweise mit Polycarbonatfolien ("MAKROLON oder MAKROFOL" von BAYER AG) mit einer Schichtdicke zwischen 100 und 200 »m erhalten. Eine Schichtdicke von 500 »m liefert für die wichtigsten Anwendungsfälle bereits ein selbsttragendes Tiefziehteil.

Erfindungsgemäß kann gleichzeitig in einem Arbeitsschritt auch eine mehrlagige Folienanordnung umgeformt werden. Häufig ist eine zwei-lagige Anordnung zweckmäßig, bei der sich ein Farbaufdruck oder sonstiger Belag auf einer Innenfläche einer Folienbahn befindet. Die zweite Lage kann aus einer Schutzschicht, beispielsweise aus einem Zwei-Komponenten-Lack oder vorzugsweise aus einer weiteren Folienbahn bestehen. Auf der Innenfläche der anderen, nicht bedruckten Folie kann blasenfrei eine Klebemittelschicht, beispielsweise ein Heiß-Siegel-Kleber aufgetragen werden. Die Sandwich-Anordnung wird in einem einzigen Arbeitsschritt umgeformt, wobei der Farbaufdruck oder Belag nicht mit der Form in Berührung kommt. Am tiefgezogenen Kunststoff-Formteil befindet sich der Farbaufdruck bzw. Belag geschützt "innen" zwischen je einer Lage Folienmaterial. Wird die konkave Innenwand eines solchen zweilagigen Formteils mit schmelzflüssigem Kunstharz hinterspritzt, so wird der Farbaufdruck bzw. Belag nicht beschädigt, obwohl das weitere Kunstharz mit einer Temperatur aufgebracht wird, die typischerweise 100°K und mehr oberhalb der Verformungs-/Erweichungs-Temperatur des Farbträgers des Farbaufdruckes liegt. Unter den Spritzbedingungen wird auch die Klebemittelschicht, beispielsweise der Heiß-Siegel-Kleber ausgehärtet.

Die erfindungsgemäße Hochdruckverformung kann sowohl an thermoplastischen wie an duroplastischen Folienmaterialien vorgenommen werden. Für die Auswahl sind vor allem die Kalt-Verformbarkeit (Verformbarkeit bei Raumtemperatur) und das Rückstellvermögen nach erfolgter Umformung maßgebend. Vorzugsweise werden kalt-reckbare Folienmaterialien eingesetzt, die bei Raum- und Gebrauchstemperatur ein möglichst geringes Rückstellvermögen aufweisen. Eine verbleibende geringe Rückstellneigung kann durch Hinterspritzen des Tiefziehteils mit weiterem Kunstharz kompensiert werden. Für viele Anwendungsfälle werden vorzugsweise Folienmaterialien mit guter bis hoher Transparenz vorgesehen. Insbesondere Polycarbonate (beispielsweise die von BAYER AG vertriebenen MAKROLON-Sorten), Polyester, insbesondere aromatische Polyester (beispielsweise Polyalkylenterephthalate), Polyamide (beispielsweise PA 6- oder PA 66-Sorten, hochfeste "Aramide-Folien"), Polyimide (beispielsweise die unter der Handelsbezeichnung "KAPTON" vertriebenen Folien auf der Basis von Poly-(diphenyloxid-pyromellith-imid)) sowie Polyarylate haben sich gut bewährt und werden vorzugsweise angewandt. Besonders gute Ergebnisse wurden mit Folienmaterialien aus Polycarbonaten ("MAKROLON"), Polyalkylenterephthalaten und Polyimiden ("KAPTON") erzielt; solche Materialien werden im Rahmen der vorliegenden Erfindung besonders bevorzugt verarbeitet. Auch organische thermoplastische Celluloseester, insbesondere deren Acetate, Propionate und Acetobutyrate (beispielhafte Folienmaterialien werden von BAYER AG unter der Handelsbezeichnung "CELLIDOR" vertrieben) sind geeignet und können im Einzelfall eingesetzt werden. Der etwas geringeren mechanischen Belastbarkeit kann durch einen geringeren Arbeitsmitteldruck und/oder verzögerten Druckaufbau zur Umformung begegnet werden. Reine Polyolefine wie beispielsweise Polyäthylen oder Polypropylen, sind weniger geeignet, weil sie ein hohes Rückstellvermögen aufweisen. Andererseits sind Polyfluorkohlenwasserstoffe insbesondere die unter der Bezeichnung FEB bekannten Copolymerisate aus Tetrafluoräthylen und Hexafluorpropylen gut geeignet. FEB-Folie ist auch in transparenter Ausführungsform verfügbar.

Gemäß einer besonderen Durchführungsform des neuen Verfahrens kann die Verformung gegen einen federnd gelagerten Wandungsteil erfolgen, insbesondere gegen einen federnd gelagerten Boden des Formhohlraumes. Dieser Verfahrensschritt ist bei der Verformung großflächiger Kunststoffolien, welche zum Durchhängen neigen, von Vorteil, weil diese dann während des gesamten Verformungsvorganges abgestützt bleiben.

Die erfindungsgemäße Hochdruckverformung kann in Formwerkzeugen durchgeführt werden, die grundsätzlich vom Preßluft-Umformverfahren her bekannt sind, und im vorliegenden Falle an den wesentlich höheren Druckmitteldruck angepaßt sind. Typischerweise enthält die eine Formhälfte den Formhohlraum und die andere Formhälfte besteht aus einer Druckglocke, deren Druckraum über eine Druckleitung mit einem Druckluftkompressor verbunden ist.

Vorzugsweise kann der Boden des Formhohlraumes aus einer auf Federn gelagerten Platte bestehen, welche in unbelastetem Zustand eine die unverformte Kunststoffolie abstützende Position und in druckbelastetem Zustand eine das Maximalvolumen des Formhohlraumes freigebende Stellung einnimmt.

Alternativ kann die eine Formhälfte von einem auf Federn gelagerten Rahmen umgeben sein, an welchem die zu verformende Folie festgelegt wird. Beim Absenken des Rahmens gegenüber der Formhälfte wird die Folie über die Formhälfte gezogen und gespannt. Die zur Verformung erforderliche Taktzeit läßt sich noch weiter verkürzen. In diesem Falle kann die Form eine Positivform oder eine Negativform sein und/oder erhabene Abschnitte und Formhohlräume aufweisen.

Gemäß einer anderen neuen, gegebenenfalls zusätzlichen Ausgestaltung kann vorgesehen werden, daß in der Druckleitung zwischen Druckglocke und Kompressor ein Windkessel angeordnet ist. Durch diesen Puffer wird der Verformungsvorgang begünstigt.

Die Formtiefen sind abhängig von der Formfläche und sollen zumeist 50 mm nicht übersteigen; vorzugsweise sind Formtiefen kleiner 20 mm vorgesehen. Vorzugsweise werden innerhalb dieser Grenzen Formfläche(n) und Formtiefe derart aufeinander abgestimmt, daß die durch den Tiefziehvorgang bewirkte Flächenzunahme 120% der verformbaren Folienfläche nicht übersteigt. Es kann auch mit Mehrnutzen-Formwerkzeugen gearbeitet werden, die eine Anzahl Formnester aufweisen, beispielsweise 32 Formnester und mehr.

Nachstehend wird die Erfindung mehr im einzelnen anhand bevorzugter Ausführungsformen mit Bezugnahme auf die Zeichnungen erläutert; die letzteren zeigen:
- Fig. 1: anhand einer schematischen Schnittdarstellung eine erste Ausführungsform eines Formwerkzeugs zur Durchführung der erfindungsgemäßen Hochdruckverformung;
- Fig. 2: anhand einer schematischen Schnittdarstellung eine zweite Ausführungsform eines Formwerkzeugs zur Durchführung der erfindungsgemäßen Hochdruckverformung;
- Fig. 3: in einer Draufsicht einen ebenen, bedruckten Folienabschnitt;

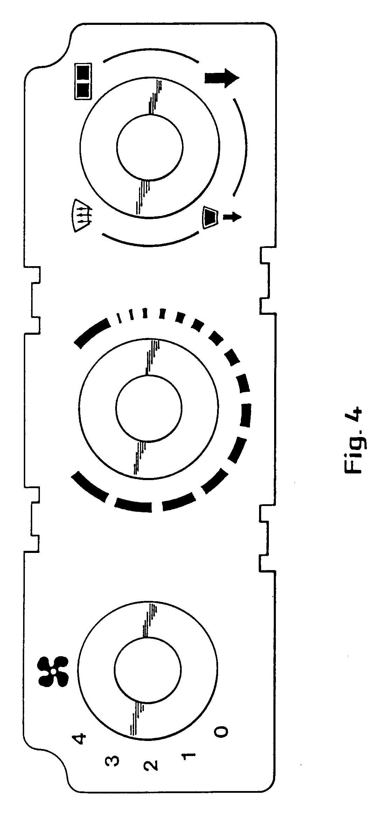

- Fig. 4: in einer Draufsicht ein aus dem ebenen Folienabschnitt nach Fig. 1 nach der erfindungsgemäßen Hochdruckverformung erhaltenes Tiefziehteil;
- Fig. 5: in einer Schrägansicht das Formteil nach Fig. 4;
- Fig. 6: eine Schnittdarstellung des Formteils längs der Schnittlinie IV-IV aus Fig. 5;
- Fig. 7: in einer Schrägansicht ein erfindungsgemäßes Kunststoff-Formteil, das durch Hinterspritzen des Formteils nach Fig. 4, 5 und 6 erhältlich ist;
- Fig. 8: eine Schnittdarstellung des Formteils längs der Schnittlinie VI-VI aus Fig. 7;
- Fig. 9a, 9b und 9c: - jeweils in einer Schrägansicht - ein weiteres Beispiel eines erfindungsgemäßen Tiefziehteils in Form eines Schalterdeckels.

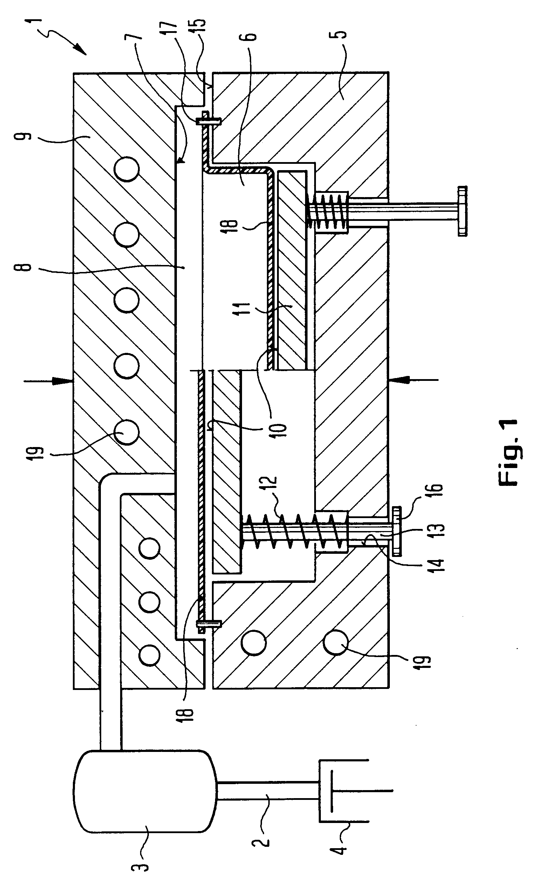

Die Fig. 1 zeigt ein Formwerkzeug 1, welches über eine Druckleitung 2, in welcher ein Windkessel 3 angeordnet ist, mit einem mehrstufigen Kompressor 4 zum Erzeugen von Druckluft von 20 bis 300 bar in Verbindung steht. Das Formwerkzeug 1 besteht aus einer unteren Formhälfte 5, in welcher ein Formhohlraum 6 angeordnet ist, und einer als Druckglocke 7 ausgebildeten, einen Druckraum 8 aufweisenden oberen Formhälfte 9. Der Boden 10 des Formwerkzeuges ist durch eine senkrecht bewegbare Platte 11 gebildet, welche durch Federn 12 abgestützt ist und Führungsbolzen 13 aufweist, welche in Führungsbohrungen 14 gleiten. In unbelastetem Zustand nimmt die Platte 11 die Position gemäß linker Darstellung ein, in welcher der Boden 10 mit der Trennebene 15 eine Fläche bildet, indem die Anschläge 16 den Hub der Platte 11 begrenzen. Wenn der Druckraum 8 beaufschlagt wird, wird die zwischen Zentrierstiften 17 angeordnete Kunststoffolie 18 verformt, wobei die Platte 11 durch den Druck unter Zusammenpressen der Federn 12 zurückfährt, bis sie anschlägt und dabei die Position gemäß rechter Darstellung einnimmt. Das Formwerkzeug 1 ist in einer Formschließeinheit angeordnet, welche durch symbolische Pfeile angedeutet ist. Es versteht sich, daß diese Schließeinheit so ausgebildet sein muß, daß sie die durch die Druckbeaufschlagung des Formwerkzeuges auftretenden Kräfte abfängt. Die Heizkanäle des Formwerkzeuges sind mit 19 bezeichnet.

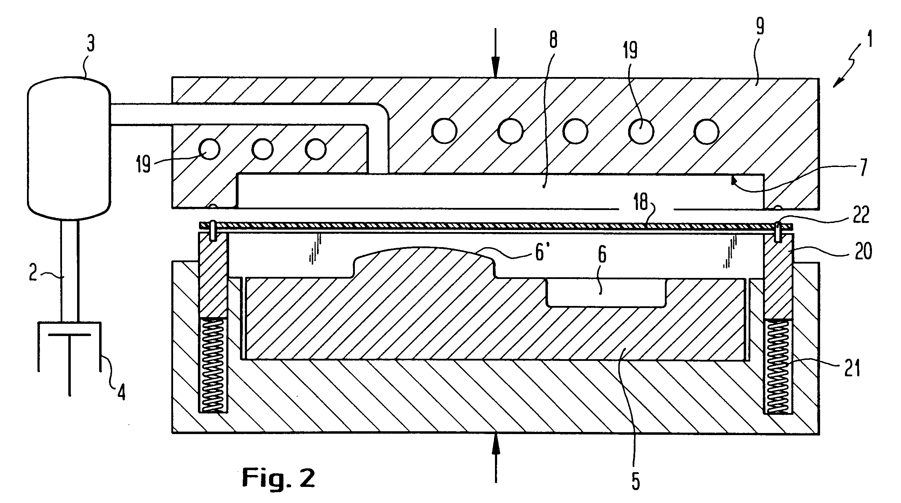

Die Fig. 2 zeigt ein weiteres Formwerkzeug 1 mit einer unteren, feststehenden Formhälfte 5 und einer oberen, beweglichen, als Druckglocke 7 ausgebildeten Formhälfte 9. An der unteren Formhälfte 5 sind sowohl Formhohlräume 6 wie erhabene Abschnitte 6′ ausgebildet. Die untere Formhälfte 5 ist von einem senkrecht bewegbaren Rahmen 20 umgeben, der durch Federn 21 abgestützt ist. Die zu verformende Folie 18 wird an Zentrierstiften 22 festgelegt, die von der Oberseite des Rahmens 10 abstehen. Beim Absenken der oberen Formhälfte 9 wird anfänglich die zu verformende Folie 18 zwischen Formhälfte 9 und Rahmen 20 eingespannt. Beim weiteren gemeinsamen Absenken von Formhälfte 9 und Rahmen 20 wird die Folie 18 über die erhabenen Abschnitte 6′ der Formhälfte 5 gezogen und gespannt. Anschließend wird Druckluft in die Druckglocke 7 eingeführt und die Folie 18 exakt an die gesamte Kontur der Formhälfte 5 angeformt. Beim Hochfahren der Formhälfte 9 verstellen die Federn 21 den Rahmen 20 gegenüber der Formhälfte 5 und die verformte Folie wird von der Formhälfte 5 gelöst.

### Beispiel 1

Eine 500 »m dicke Polycarbonatfolie auf Basis Bisphenol A mit einem Molekulargewicht von 30 000, deren Erweichungstemperatur bei 145°C liegt, wird mit einer handelsüblichen hochdeckenden schwarzen Siebdruckfarbe auf Basis Polyvinylchlorid/Acrylharz-Mischung negativ so bedruckt, daß zwei Symbolfelder offen bleiben. Das eine Symbolfeld wird mit einer weißen, das andere mit einer roten Siebdruckfarbe der gleichen Harzbasis wie die hochdeckende schwarze Farbe, hinterlegt. Danach wird die bedruckte Folie in an sich bekannter Weise so ausgestanzt, daß die Symbole den vorher bestimmten Abstand zur äußeren Kontur haben. Die so präparierte Kunststoffolie wird in das auf 120°C aufgeheizte Werkzeug gemäß Fig. 1 so eingelegt, daß die Farbseite zur Druckglocke 7 zeigt. Nach Schließen des Formwerkzeuges erfolgt die Verformung der Kunststoffolie mittels Druckluft von 150 bar. Die Zykluszeit für den Verformungsvorgang beträgt weniger als 2 Sekunden. Nach dem Öffnen des Formwerkzeuges läßt sich das verformte Teil entnehmen.

### Beispiel 2

Eine 100 »m dicke unbedruckte Polyimidfolie auf Basis Pyromellithsäureanhydrid und 4,4′-Dihydroxy-diphenyläther mit einem Molekulargewicht von 60 000, deren Erweichungspunkt über der Zersetzungstemperatur von 450°C liegt, wird in das Formwerkzeug eingelegt. Der Formhohlraum 6 hat die Form eines Quaders mit den Abmessungen 80x80x20 mm. Nach dem Schließen des Formwerkzeuges erfolgt die Verformung mittels Druckluft unter einem Druck von 200 bar. Die Zykluszeit beträgt weniger als 2 Sekunden.

### Beispiel 3

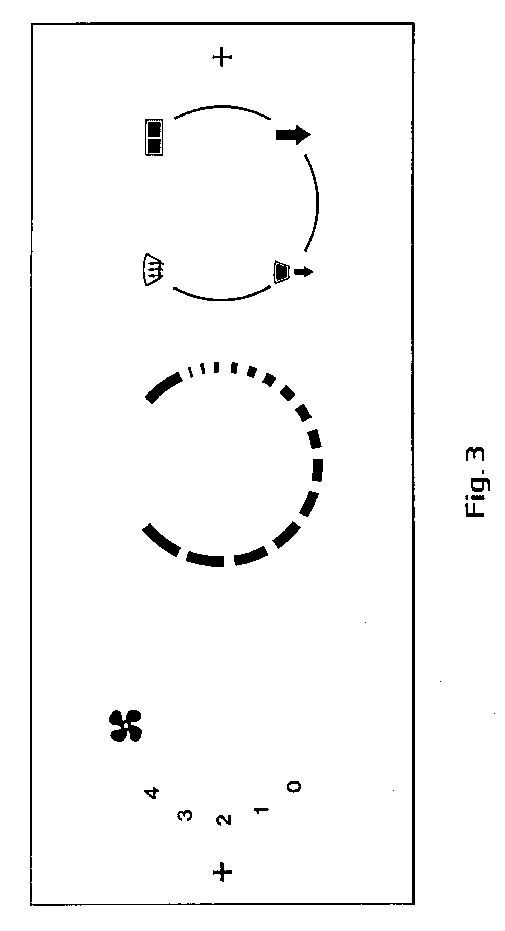

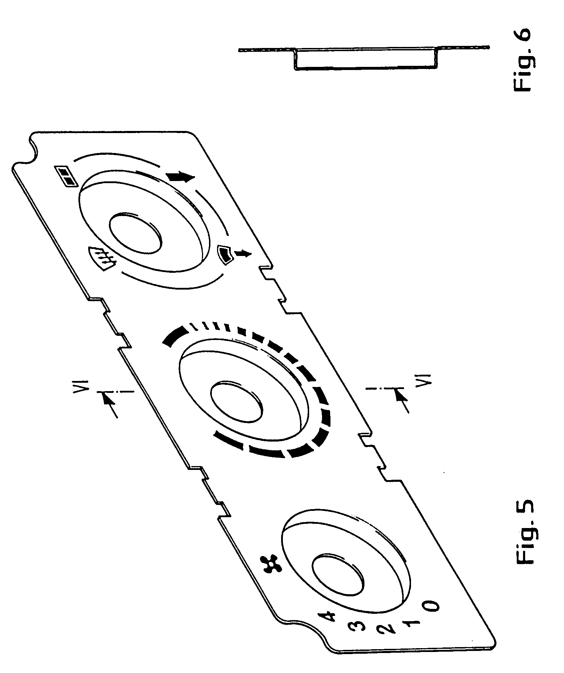

Das in Fig. 5 gezeigte Formteil dient als Blende einer Einrichtung zur Regelung der Lüftung/Heizung in einem Kraftfahrzeug. Als Ausgangsmaterial dient eine transparente, gegebenenfalls mattierte Folie aus Polycarbonatmaterial auf der Basis Bisphenol A (MAKROLON, bezogen von BAYER AG, Erweichungstemperatur ca. 150°C) mit einer Schichtdicke von 125 »m. Entsprechend den vorgesehenen Symbolen und Bildern an der Lüftungs/Heizungs-Blende werden im Siebdruckverfahren mehrere Farbschichten aufgetragen. Zuerst wird deckend ein schwarzer Farbaufdruck aufgetragen, der Fenster für die Bilder freiläßt. Anschließend werden diese Fenster mit verschiedenen Farben, beispielsweise ausgewählte Bilder in blau, weiß und rot bedruckt. Die für die Farbaufdrucke verwendeten Farben enthalten in allen Fällen einen Farbstoffträger, der bei etwa 100°C erweicht. Sämtliche Farbaufdrucke befinden sich, teilweise übereinander, auf der gleichen Oberfläche der Folie, die in Fig. 3 in Originalgröße dargestellt ist.

Auf die bedruckte Oberfläche der ebenen Folie wird eine weitere, mit Heiß-Siegel-Kleber beschichtete ebene, transparente Folie (MAKROLON, 125 »m) blasenfrei aufgelegt. Die erhaltene Doppelfolie wird auf etwa 80 und 120°C erwärmt, beispielsweise in einem Wärmeofen oder in einer mit Wärmestrahlern versehenen Durchlaufstrecke. Die ca. 90 bis 100°C warme Doppelfolie wird in definierter Anordnung in ein herkömmliches, an den höheren Druckmitteldruck angepaßtes Drei-Nutzen-Formwerkzeug mit einer Nutzenfläche von 240 x 340 mm eingelegt. Zu jeder einzelnen, 207 x 68 mm großen Formfläche gehören drei im Abstand angeordnete zylindrische Aushöhlungen mit einem Durchmesser von 38 mm und einer Formtiefe von 6 mm.

Die Presse wird zugefahren, bis der Rand der Druckglocke dicht an der Oberseite der Folie anliegt, und mit einem Hydraulikmitteldruck von 100 t geschlossen. Durch die Druckglocke wird auf etwa 120°C erwärmte Druckluft eingeblasen. Die Verformung erfolgt schlagartig. Unmittelbar nach Öffnung der Form kann der tiefgezogene Bogen entnommen werden, weil weit unterhalb der Erweichungstemperatur des Polycarbonatmaterials gearbeitet worden ist. An den fertigen Tiefziehteilen betragen die Dickenschwankungen weniger als 10 %.

Aus dem erhaltenen, tiefgezogenen Bogen werden die einzelnen (3) Formteilabschnitte ausgestanzt. Jeder Formteilabschnitt wird in ein Spritzgußwerkzeug eingelegt und mit transparentem Kunststoff bis zu einer Schichtdicke von 3 mm hinterspritzt. Als Spritzmasse dient ebenfalls ein Polycarbonatmaterial (MAKROLON). Es wird ein festes, formstabiles Kunststoff-Formteil erhalten, das mit einem mehrfarbigen Farbaufdruck versehen ist. Der Farbaufdruck befindet sich "innerhalb" der Formkörperwand durch eine ca. 120 »m dicke Kunststoffschicht von der Oberfläche entfernt und ist damit vor Abrieb und Beschädigung geschützt.

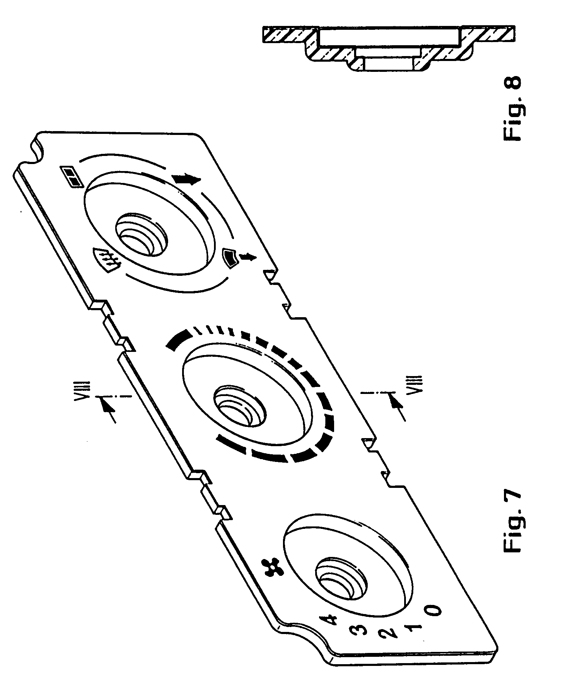

Die Fig. 5 und 6 zeigen das nach dem Tiefziehvorgang erhaltene, dünnwandige Kunststoff-Formteil in einer Schrägansicht bzw. in einer Schnittdarstellung. Die Fig. 7 und 8 zeigen jeweils in einer Schrägansicht bzw. in einer Schnittdarstellung das Kunststoff-Formteil nach Hinterspritzen mit einer ca. 3 mm starken transparenten Kunststoffschicht.

### Beispiel 4

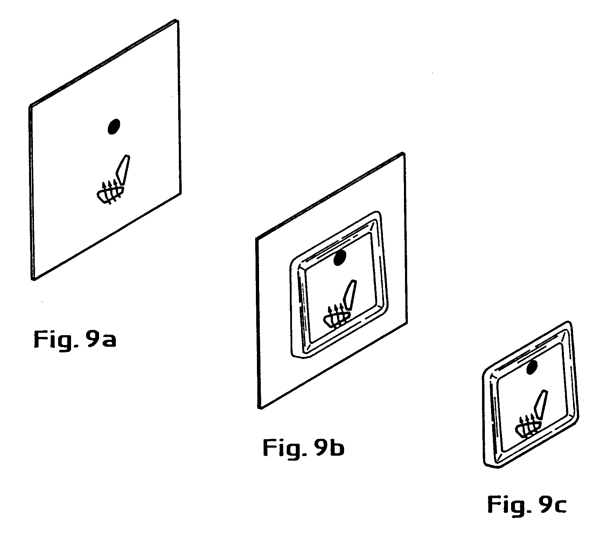

Die Fig. 9a, 9b und 9c zeigen jeweils in einer Schrägansicht die verschiedenen Stufen zur Erzeugung eines als Schalterdeckel dienenden Kunststoff-Formteils. Wiederum stellen die Figuren getreue Nachbildungen der Originale dar. Obwohl sich hier Bilder an einem Folienabschnitt befinden, der im Verlauf des Tiefziehvorganges in den Formhohlraum hinein verformt wird, tritt praktisch keine Verzerrung und/oder sonstige Verschlechterung der auf die ebene Folie aufgedruckten Bildmaske auf.

## Patentansprüche

1. Verfahren zur Herstellung eines tiefgezogenen Kunststoff-Formteils, wobei kalt-reckbares Folienmaterial
bei einer Arbeitstemperatur unterhalb der Erweichungstemperatur des Folienmaterials
mit Hilfe eines fluiden Druckmittels unmittelbar und direkt beaufschlagt und isostatisch verformt wird,
dadurch gekennzeichnet, daß
der Druckmitteldruck mehr als 20 bar beträgt; und
die Verformung des Folienmaterials innerhalb einer Zeitspanne kleiner als 5 Sekunden durchgeführt wird.

2. Verfahren nach Anspruch 1,
dadurch gekennzeichnet, daß
ein mit einem Belag, insbesondere ein mit einer Farbschicht, einem Farbaufdruck, einer aufgedampften Metalldünnschicht oder mit einer elektrisch leitenden Lackschicht versehenes Folienmaterial verformt wird.

3. Verfahren nach Anspruch 1 oder 2,
dadurch gekennzeichnet, daß
die Verformung bei einer Temperatur oberhalb der Glasübergangstemperatur der Folienmatrix durchgeführt wird.

4. Verfahren nach Anspruch 2 oder 3,
dadurch gekennzeichnet, daß
die Verformung bei einer Temperatur oberhalb der Erweichungstemperatur des Belagmaterials durchgeführt wird.

5. Verfahren nach einem der Ansprüche 1 bis 4,
dadurch gekennzeichnet, daß
die Verformung bei einer Arbeitstemperatur zwischen 80 und 130°C durchgeführt wird.

6. Verfahren nach einem der Ansprüche 1 bis 5,
dadurch gekennzeichnet, daß
die Verformung des Folienmaterials unter einem Druckmitteldruck zwischen 50 und 300 bar, insbesondere unter einem Druckmitteldruck zwischen 60 und 250 bar vorgenommen wird.

7. Verfahren nach einem der Ansprüche 1 bis 6,
dadurch gekennzeichnet, daß
die Verformung des Folienmaterials innerhalb einer Zeitspanne kleiner als 2 Sekunden durchgeführt wird.

8. Verfahren nach einem der Ansprüche 1 bis 7,
dadurch gekennzeichnet, daß
die Verformung des Folienmaterials schlagartig durchgeführt wird.

9. Verfahren nach einem der Ansprüche 2 bis 8,
dadurch gekennzeichnet, daß
in einem Arbeitsschritt ein doppelschichtiges Folienmaterial verformt wird, wobei sich der Belag, insbesondere ein Farbaufdruck, an einer Innenfläche der beiden Folienbahnen befindet.

10. Verfahren nach einem der Ansprüche 1 bis 9,
dadurch gekennzeichnet, daß
ein kalt-reckbares Folienmaterial mit einer Schichtdicke zwischen 40 und 2000 »m, insbesondere mit einer Schichtdicke zwischen 50 und 500 »m verformt wird.

11. Verfahren nach einem der Ansprüche 1 bis 10,
dadurch gekennzeichnet, daß
ein kalt-reckbares Folienmaterial aus Kunststoffen auf der Basis von Polycarbonaten, Polyamiden, Polyimiden, Polyestern, organischen Celluloseestern, Polyarylaten oder Polyfluorkohlenwasserstoffen verformt wird.

12. Verfahren nach einem der Ansprüche 1 bis 11,
dadurch gekennzeichnet, daß
die Verformung gegen einen federnd gelagerten Wandungsteil (11) eines Formhohlraumes (6) erfolgt.

13. Verfahren nach einem der Ansprüche 1 bis 12,
dadurch gekennzeichnet, daß
das nach der Verformung erhaltene, dünnwandige Tiefziehteil anschließend mit einer geeigneten Kunststoffmasse hinterspritzt wird.

## Claims

1. A method of manufacturing a deep-drawn plastic piece comprising the step of:
treating a cold-stretchable sheet material immediately and directly with a fluid pressure medium at an operating temperature lower than the softening temperature of the sheet material to deform the sheet material isostatically in order to obtain the deep-drawn formed plastic piece,
characterized in that
the fluid pressure medium comprises a fluid medium pressure of more than 20 bars; and
deforming the sheet material during a period of time of less than 5 seconds.

2. A method according to claim 1,
characterized in that
providing the sheet material with a coating, especially with a coating selected from the group of an ink film, an ink imprint, a vacuum evaporated metallic thin film, and an electrically conductive varnish film; and
deforming said coated sheet material.

3. A method according to claim 1 or 2,
characterized in that
deforming the sheet material at a temperature above the glass transition temperature of the sheet matrix.

4. A method according to claim 2 or claim 3,
characterized in that
deforming the sheet material at a temperature above the softening temperature of the coating material.

5. A method according to anyone of the claims 1 to 4,
characterized in that
deforming the sheet material at an operating temperature of between 80 and 130° C.

6. A method according to anyone of the claims 1 to 5,
characterized in that
deforming the sheet material at a fluid medium pressure of between 50 and 300 bars, especially at a fluid medium pressure of between 60 and 250 bars.

7. A method according to anyone of the claims 1 to 6,
characterized in that
deforming the sheet material within a period of time of less than 2 seconds.

8. A method according to anyone of the claims 1 to 7,
characterized in that
deforming the sheet material abruptly.

9. A method according to anyone of the claims 2 to 8,
characterized in that
a dual-layer sheet material is deformed in a single step, wherein the coating, especially an ink imprint, is provided on an inner surface of the two sheet webs.

10. A method according to anyone of the claims 1 to 9,
characterized in that
deforming a cold-stretchable sheet material of a thickness of between 40 and 2000 »m, especially of a thickness of between 50 and 500 »m.

11. A method according to anyone of the claims 1 to 10,
characterized in that
deforming a cold-stretchable sheet material comprising plastic materials based on polycarbonates, polyamides, polyimides, polyesters, organic cellulose esters, polyarylates or polyfluorohydrocarbons.

12. A method according to anyone of the claims 1 to 11,
characterized in that
deforming the sheet material against a resiliently supported wall portion (11) of a mould cavity (6).

13. A method according to anyone of the claims 1 to 12,
characterized in that
the thin-walled deep-drawn piece obtained after deforming is subsequently injection-reinforced with a suited plastic composition.

## Revendications

1. Procédé de fabrication d'une pièce emboutie en matière plastique dans lequel un matériau en feuille étirable à froid est mis en contact direct et sans intermédiaire avec un moyen de pression fluide et déformé isostatiquement à une température de travail inférieure à la température de ramollissement du matériau en feuille, caractérisé par le fait que la pression du moyen de pression est supérieure à 20 bars et que la déformation du matériau en feuille s'effectue dans un laps de temps inférieur à 5 secondes.

2. Procédé selon la revendication 1, caractérisé en ce qu'on déforme un matériau en feuille muni d'un revêtement, en particulier d'une couche colorée, d'une impression en couleurs, d'une mince couche de métallisation ou d'une couche de vernis électriquement conductrice.

3. Procédé selon l'une des revendications 1 ou 2, caractérisé en ce que la déformation est effectuée à une température supérieure à la température de transition vitreuse de la matrice de la feuille.

4. Procédé selon l'une des revendications 2 ou 3, caractérisé en ce que la déformation est effectuée à une température supérieure à la température de ramollissement du matériau de revêtement.

5. Procédé selon l'une des revendications 1 à 4, caractérisé en ce que la déformation est effectuée à une température de travail comprise entre 80 et 130°C.

6. Procédé selon l'une des revendications 1 à 5, caractérisé en ce que la déformation du matériau en feuille est effectuée sous une pression du moyen de pression comprise entre 50 et 300 bars, en particulier sous une pression du moyen de pression comprise entre 60 et 250 bars.

7. Procédé selon l'une des revendications 1 à 6, caractérisé en ce que la déformation du matériau en feuille est effectuée dans un laps de temps inférieur à 2 secondes.

8. Procédé selon l'une des revendications 1 à 7, caractérisé en ce que la déformation du matériau en feuille est effectuée brusquement.

9. Procédé selon l'une des revendications 2 à 8, caractérisé en ce qu'un matériau en feuille à deux couches est déformé en une seule opération, le revêtement, en particulier une impression en couleurs, se trouvant sur la face intérieure des deux bandes de feuille.

10. Procédé selon l'une des revendications 1 à 9, caractérisé en ce qu'on déforme un matériau en feuille étirable à froid avec une épaisseur de couche entre 40 et 2000 »m, en particulier avec une épaisseur de couche entre 50 et 500 »m.

11. Procédé selon l'une des revendications 1 à 10, caractérisé en ce qu'on déforme un matériau en feuille étirable à froid constitué de matières plastiques à base de polycarbonates, de polyamides, de polyimides, de polyesters, d'esters de cellulose organiques, de polyarylates ou d'hydrocarbures polyfluorés.

12. Procédé selon l'une des revendications 1 à 11, caractérisé en ce que la déformation se fait contre un élément de paroi (11) d'une cavité de moule (6) monté élastiquement.

13. Procédé selon l'une des revendications 1 à 12, caractérisé en ce que la pièce emboutie à paroi mince obtenue après la déformation, reçoit ensuite une injection d'une masse de matière plastique appropriée sur la face arrière.
